Europäisches Patentamt

(19) European Patent Office (11) Publication number: **0 159 754**

Office européen des brevets A2

(12) # EUROPEAN PATENT APPLICATION

(21) Application number: 85200565.1

(22) Date of filing: 15.04.85

(51) Int. Cl.⁴: **A 23 F 5/26,** A 23 F 5/36, A 23 F 5/18

(30) Priority: **24.04.84 US 603487**
**24.04.84 US 603523**
**24.04.84 US 603462**

(43) Date of publication of application: **30.10.85**
**Bulletin 85/44**

(84) Designated Contracting States: **BE DE FR GB IT NL SE**

(71) Applicant: **THE PROCTER & GAMBLE COMPANY,**
**301 East Sixth Street, Cincinnati Ohio 45202 (US)**

(72) Inventor: **Morrison, Lowen Robert, Jr., 6277 Shannon Dr.,**
**Hamilton Ohio (US)**
Inventor: **Novak, Thomas Joseph, 975 Hollow Creek**
**Drive, Milford Ohio (US)**
Inventor: **Steele, Carmie Ann, 2313 Raleigh Lane,**
**Cincinnati Ohio 45215 (US)**
Inventor: **Stankovics, Stephen Andrew, 6838 Plainfield**
**Rd., Silverton Ohio 45236 (US)**

(74) Representative: **Suslic, Lydia et al, Procter & Gamble**
**European Technical Center Temselaan 100,**
**B-1820 Strombeek-Bever (BE)**

(54) Soluble coffee composition.

㊸ A coffee extract or concentrate and a soluble coffee which are similar to roast and ground coffee solubles in composition of moderately volatile flavor components are disclosed. The soluble coffee composition also contains less of the off-flavor components normally found in high quantities in conventional instant coffees. The coffees are characterized by high pyrazines derivative content and low content of furfural. This soluble coffee composition can be aromatized for use as a premium soluble coffee product. Alternatively, it is compatible for mixing with conventional roast and ground coffee in single- and multiple-serving brewing articles, such as coffee bags.

EP 0 159 754 A2

L. Robert Morrison, Jr.
Thomas J. Novak
Carmie A. Steele
Steven A. Stankovics

## Technical Field

This invention relates to a coffee extract or concentrate and a process for making it and to a soluble coffee composition which have a flavor similar to that of regular roast and ground coffee and less like the flavor of instant or soluble coffees and to a brewing article for use in conjunction with the soluble coffee product. The coffee is characterized by its low furfural content and high content of pyrazine derivatives.

## Background of the Invention

The standard of flavor excellence among many coffee drinkers is freshly brewed roast and ground coffee. This beverage provides a balanced blend of aroma and flavor notes contributed by volatile and moderately volatile flavor compounds, as well as nonvolatile coffee solids. However, for reasons of convenience and economy, many consumers do not prepare freshly brewed roast and ground coffee for each coffee consumption experience. Roast and ground coffee is typically conveniently brewed in quantities of 5 to 10 cups (or more) at a time. For many consumers, such as single consumers, it is uneconomical to brew a large pot of coffee to consume a single cup. Brewing a single cup in most common coffeemakers involves the same inconvenience as brewing a number of cups. Thus, many consumers have turned to soluble coffee products as a substitute.

Unfortunately, most soluble coffee products have serious deficiencies. Many soluble coffee products are lacking in the volatile and moderately volatile flavor components which are easily lost during processing. In addition, the economics of soluble coffee manufacture forces producers to extract the maximum possible yield from their percolation processes. This typically involves the use of high temperature and pressure extraction processes to hydrolyze otherwise insoluble coffee constituents and to provide a higher soluble yield. This modifies some of the existing flavor compounds present in roast and ground coffee, and it also creates or manufactures additional flavor compounds.

Also, it is both difficult and uneconomical to package, ship and sell substantial quantities of water in coffee products. As a result, most commercial extracts are reduced to dryness for packaging and sale, typically by thermal evaporative techniques which further aggravate the problem of volatile loss and flavor degradation.

As a result of this processing, most instant coffees are poor reproductions of the flavor of freshly brewed roast and ground coffee. Even where low-boiling volatiles have been added by aromatization processes, soluble products are often lacking in moderately volatile aromatics, and, in addition, contain off-flavor aromatic compounds generated by thermal processing and by hydrolysis during extraction.

For these reasons, it would be desirable to provide single-serving convenience in a roast and ground coffee product. As a result, attempts have been made to package roast and ground coffee in single-serving brewing packets, like tea bags. However, the brewing time of such coffee bags is longer than the time to make an instant coffee, and the extractability can be variable depending on the water temperature, brew time, volume of water, etc. This has been overcome in some products by the combination of the roast and ground coffee in a packet with soluble coffee, including solubles produced by low-temperature extraction processing. The use of solubles produced by low-temperature processing (i.e., solubles extraction without hydrolysis) results in a very acceptable beverage. However, the low-solids yields of low-temperature extraction processes are such that it is uneconomical to produce the product except for sale at a premium price. And unfortunately, the combination of roast and ground coffee with conventional instant coffees in a coffee bag results in a brew that tastes instant-like and foreign to those accustomed to drinking fresh brewed roast and ground coffee.

Alternatively, it would be desirable to have a soluble coffee product whose flavor is a close duplicate of freshly brewed roast and ground coffee solubles and yet economical to produce. Numerous attempts at production of such a product have been made. Many such processes have involved strenuous efforts to capture, preserve and retain the volatiles present in freshly brewed coffee.

One such attempt is that described in U.S. 4,277,509, issued July 7, 1981 to Wouda and assigned to D.E.J. International Research Company B.V., relates to a process for "primary" extraction of roast and ground coffee. The coffee is exhaustively extracted at low temperatures with a first quantity of water. The coffee is then extracted again with a second quantity of water to remove hydrophobic aroma components. Wouda then steam strips the second extract and collects the aroma components as a small volume of stripper condensate, which is then added to the first extract. This process can be continued throughout the fresh solubles section of an extraction train.

Another approach is that described in Defensive Publication T920,012, published March 5, 1974 by Pfluger and Bowden, relates to a method for producing a soluble coffee product. In this process, the extract drawn offstream from a coffee percolation unit is split into two batches, the first containing higher quality and higher concentration extract, and the second containing lower quality and lower concentration extract. The second batch is evaporatively concentrated within a continuous evaporator and then added to the first batch. The combined extracts are dried in conventional fashion.

U.S. 3,720,518, issued March 13, 1973 to Galdo and assigned to General Foods, relates to a process for the production of a high concentration coffee extract containing 30-40% solids by weight. The key step in this process is the use of intercolumn concentration prior to the fresh stage in a percolator train. The patent describes intercolumn concentration by a variety of techniques, including flash evaporators and vacuum evaporators, as well as membrane separators and other techniques. Like Wouda, Galdo also describes stripping aroma from the extract, then adding the aroma back to the concentrate.

Unfortunately, when coupled with conventional commercial percolation or extraction processes, these aroma retention and/or aroma add-back processes have the effect of also retaining off-flavor volatiles which have been generated during the extraction process. As a result, current instant coffees, both spray dried and freeze dried, have a characteristic flavor which is different from the flavor of freshly brewed roast and ground coffee.

Surprisingly, it has been found that an aromatic soluble coffee can be made at about 35% to 50% solids yield which retains the moderately volatile flavor components characteristic of roast and ground coffee but which does not contain the flavor materials characteristic of soluble or instant coffees which have been hydrolyzed during processing. The process used to create this new soluble coffee composition involves a conventional extraction and hydrolysis of roast and ground coffee followed by multistage or countercurrent steam stripping of the hydrolysis extract. The hydrolysis volatiles are discarded.

U.S. 4,129,665, issued December 12, 1978 to Clark, and assigned to Nestle, relates to a process for extracting vegetable materials in the liquid phase in a group of "cells", divided into hydrolysis extraction and fresh extraction cells. Extraction water is run through the cells countercurrently. Extract from the hydrolysis stage is subjected to a vacuum evaporation or rapid expansion. Then water is added to the partially evaporated extract in a quantity at least equal to the quantity of evaporated liquid, and preferably greater than the quantity of evaporated liquid, prior to passage of the extract through the fresh extraction cells.

Clark used a countercurrent hydrolysis step for vegetable materials in U.S. 4,129,665. Unfortunately, he evaporated the extract instead of steam stripping. Evaporation is not capable of obtaining the degree of removal, for example, of aqueous furfural as is countercurrent steam stripping. Moreover, evaporation involves a heat treatment of the extract which causes thermal degradation of the aroma and flavor coffee solids. This heating and concentration also creates or encourages the precipitation of polymeric materials from solution during evaporation.

It is an object of this invention to provide a soluble coffee which closely approximates the flavor of freshly brewed roast and ground coffee and which is lacking in the off-flavors which are characteristic of hydrolyzed coffee.

It is a further object of this invention to provide a coffee extract or concentrate which has a flavor and aroma approximating fresh roast and ground coffee extracts.

It is still another object of this invention to provide a soluble coffee which can be manufactured in high yield for combination with roast and ground coffee to produce a less bitter coffee brew.

It is an object of this invention to provide a process for producing a coffee extract and a soluble coffee which closely approximates the flavor of freshly brewed roast and ground coffee.

It is a further object of this invention to provide a process for making a soluble coffee which can be manufactured in high yield but which does not contain off-flavors associated with hydrolysis extraction.

It is still another object of this invention to provide a process for making a regular or decaffeinated coffee extract which closely approximates the flavor of freshly brewed coffee.

It is an object of this invention to provide an infusion device containing a specially processed soluble coffee in combination with roast and ground coffee.

These and other objects of the invention will be evident from the following disclosure.

## Summary of the Invention

A coffee extract comprising: (a) at least 15%, and preferably at least 35%, coffee solids, said solids comprising non-volatile and volatile aroma and flavor compounds, at least two of said aroma and flavor compounds being furfural and pyrazine derivatives; (b) wherein the ratio of furfural to total pyrazine derivatives is less than 1.5:1 and wherein the total pyrazine derivatives are at least 20,000 corrected g.c. counts on a dry solids basis, wherein said g.c. counts are measured on a Freon 11 solution of separated volatiles by capillary gas chromatography on a fused silica column; and (c) wherein the total ash is less than 12%, on a dry solids basis.

This coffee extract is concentrated in a manner which preserves the coffee volatiles and dried to form a soluble coffee product with essentially the same furfural, pyrazine derivatives and ash content.

The process comprises the steps of:

1) forming a hydrolyzed roast and ground coffee extract;

2) multistage or countercurrently steam-stripping the hydrolysis extract to remove hydrolysis volatiles;

3) discarding said hydrolysis volatiles; and

4) passing the stripped hydrolysis extract through roast and ground coffee at a temperature of from about 138°C (280°F) to about 21°C (70°F) to produce a final extract.

This extract is concentrated in a manner which preserves the low and the moderately volatile compounds. Preferably, freeze concentraton is used to produce a concentrated coffee extract. The concentrated coffee extract can also be dried to make a soluble coffee.

The coffee brewing article comprises a water-permeable infusion article containing:

a) roast and ground coffee; and

b) a soluble coffee composition comprising:

1) volatile and non-volatile aroma and flavor compounds, at least two of said aroma and flavor compounds being furfural and pyrazine derivatives;
   wherein the ratio of furfural to total pyrazine derivatives is less than 1.5:1, and wherein the pyrazine derivatives have a g.c. count of at least 20,000, wherein said g.c. counts, on a dry solids basis, are measured on a Freon 11 solution of separated volatiles by capillary gas chromatography on a fused silica column; and

2) wherein the total ash is less than 12% on a dry solids basis.

## Brief Description of the Figures

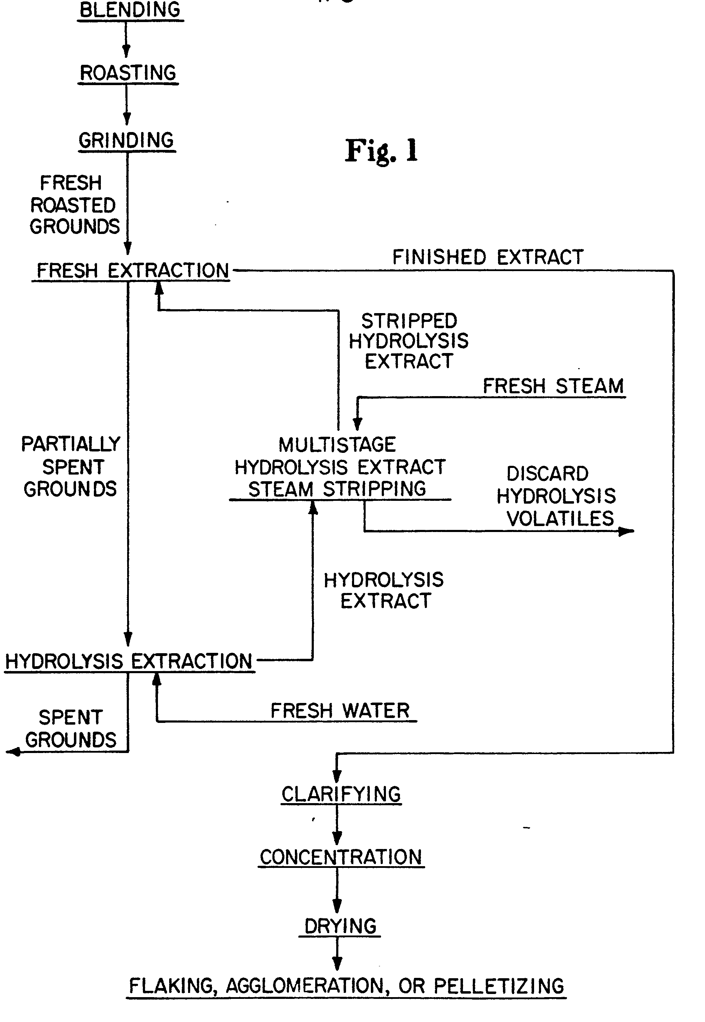

Figure 1 is a schematic of the coffee extract and soluble coffee process.

Figures 2A, 2B, 2C, 3A, 3B and 3C are chromatograms of various coffee products.

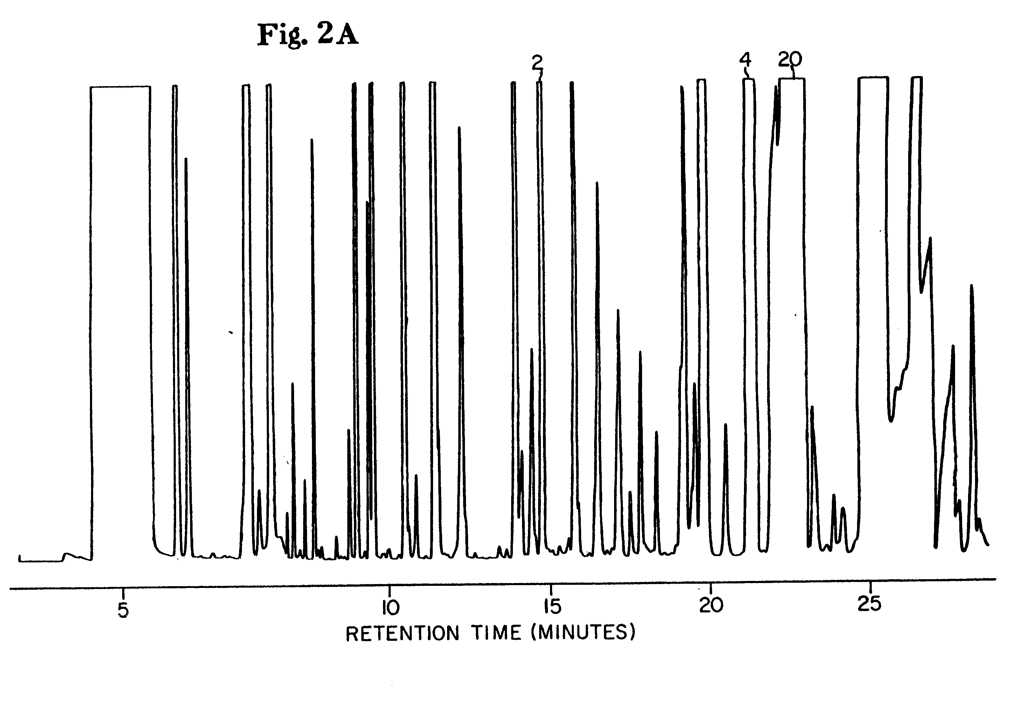

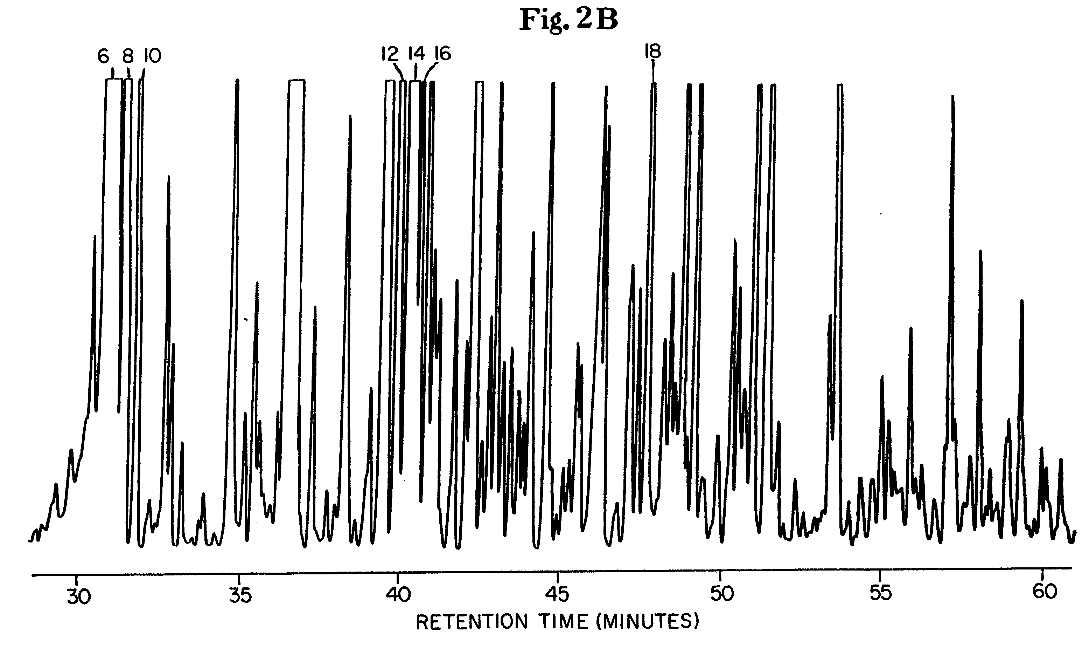

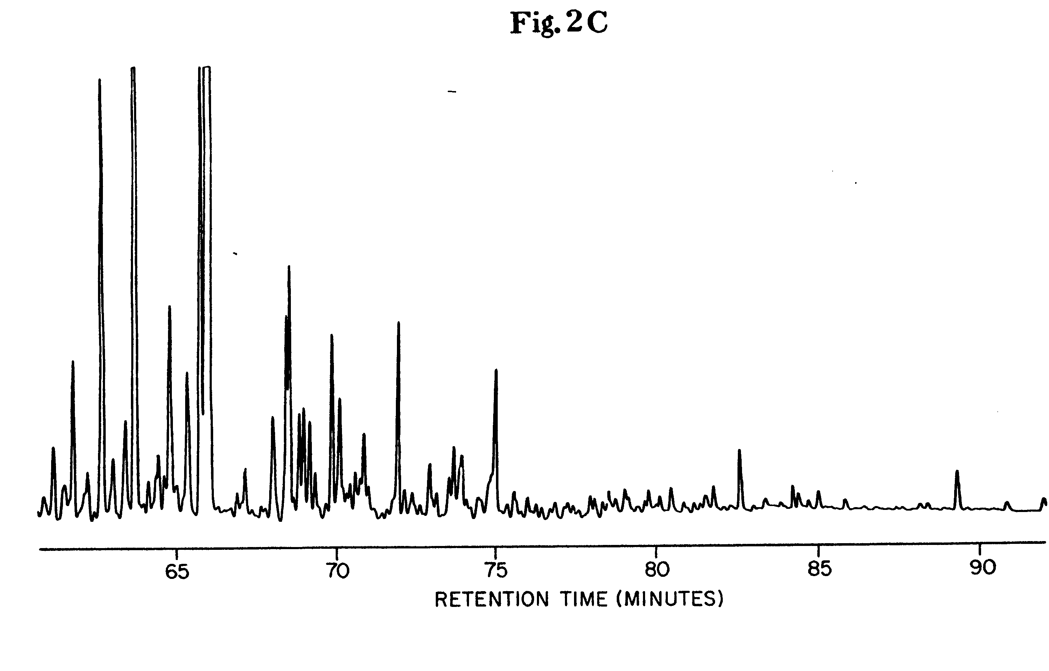

Figures 2A, 2B and 2C are chromatograms of organic compounds in the soluble coffee of this invention.

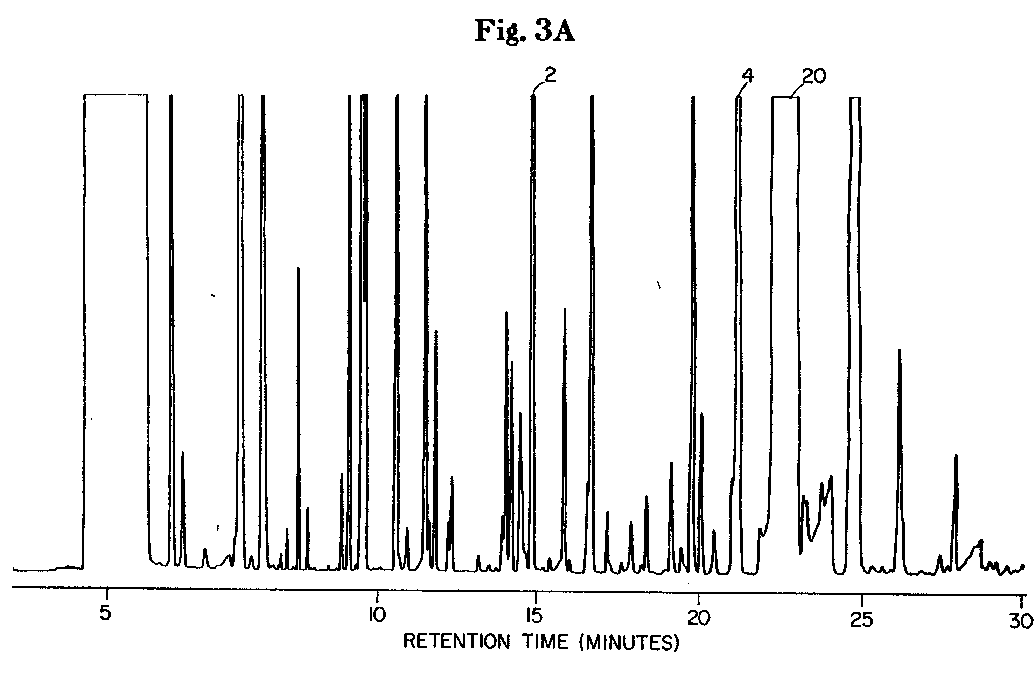

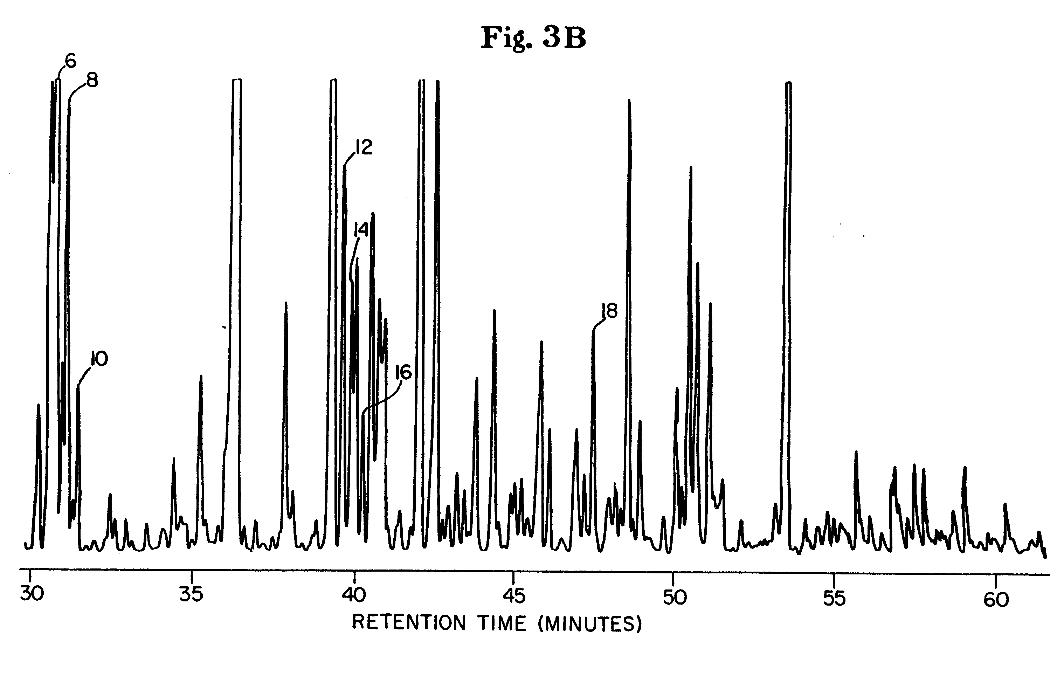

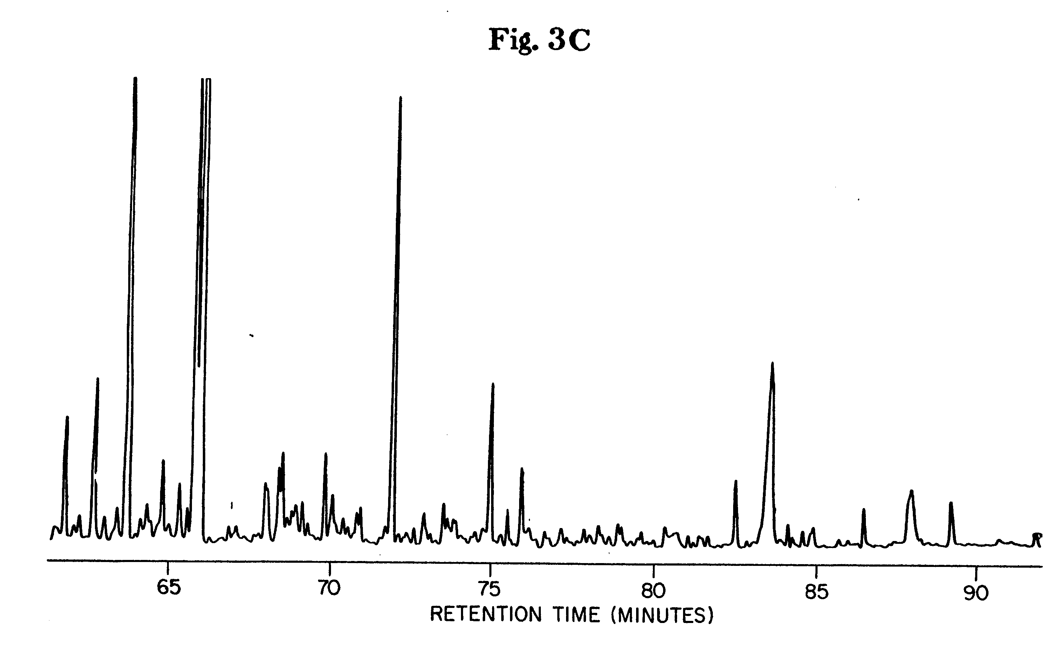

Figures 3A, 3B and 3C are chromatograms of organic compounds in a commercial spray-dried instant coffee.

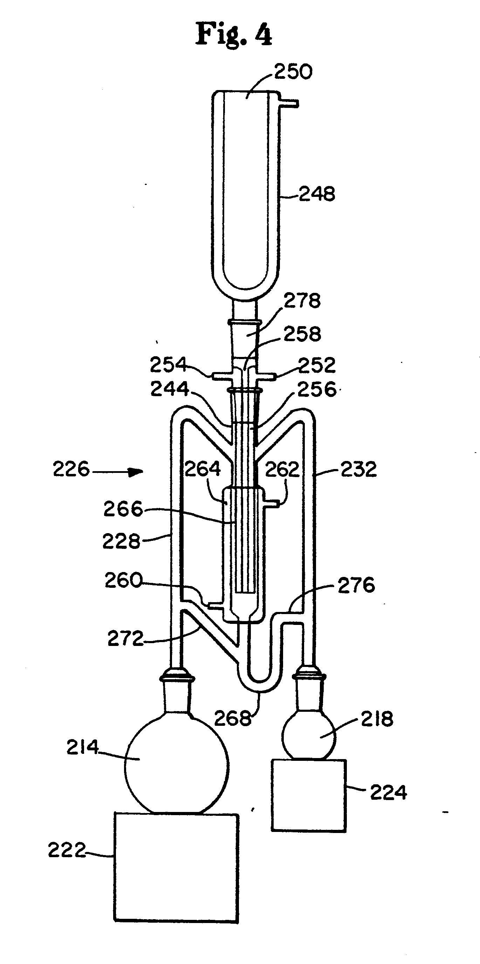

Figure 4 is a drawing of the steam distillation apparatus used to concentrate the coffee volatiles for the analytical gas chromatographic method.

## Disclosure of the Invention

### I. The Coffee Composition

This invention provides an instant or soluble coffee and a coffee extract or concentrate which are similar to ground roast coffee in its composition of moderately volatile flavor components. At the same time, it is different in composition from other soluble coffees. In particular, the soluble coffee of this invention contains relatively large quantities of moderately volatile compounds, having normal boiling points of 88°C (190°F) to 205°C (401°F), and normally found in roast and ground coffees. These quantities are significantly higher than those present in conventional instant coffees. Moreover, the coffee brew made from the extract or soluble coffee is less bitter than roast and ground and typical soluble coffees.

All of the specific components of coffee aroma and flavor volatiles have not been identified. It is estimated that over 250 compounds are present or contribute to the aroma and flavor of coffee. While it is not possible to say that the compounds identified herein are definitive of coffee flavor and aroma, it is believed that these compounds represent the retention of good flavors and the removal of off-flavors.

These aroma and flavor compounds importantly include various pyrazines which are formed during coffee roasting and which are considered herein to be key indicators of roast and ground coffee flavor. Such compounds include, but are not limited to, pyrazine; methyl pyrazine; 2,5-dimethyl pyrazine; 2,6-dimethyl pyrazine; 2,3-dimethyl pyrazine; 2-ethyl-6-methyl pyrazine; 2-ethyl-5-methyl pyrazine; 2,3,5-trimethyl pyrazine; and 2-ethyl-2,5-dimethyl pyrazine.

These coffee aroma and flavor compounds also include various other volatiles which are indicators of roast and ground flavor. Such non-pyrazine compounds include, without limitation, isobutyraldehyde, methyl ethyl ketone, 2,3-pentanedione, dihydro-2-methyl-3(2H) furanone, acetoacetate, 5-methyl pyrrole-2-carboxaldehyde, guaiacol, ethyl guaiacol and vinyl guaiacol.

Additionally, coffee volatiles also include various sulfur-bearing coffee volatiles which are formed during coffee roasting, and which are also considered to be key indicators of roast and ground flavor. Note that, in general, pyrazines are volatiles which can be formed during the roasting of most grains. It is the sulfur-bearing volatiles which help to distinctively separate coffee from other roasted grain beverages. These sulfur-bearing compounds, as analyzed by the gas chromatographic method described below, are not yet specifically identified. Yet, the analysis demonstrates that the soluble coffee of the process of this invention has (1) a level of these sulfur volatiles significantly higher than in conventional instant coffee, and (2) a level of these compounds essentially equal to the level in roast and ground coffee.

The composition of this invention contains less of the compounds normally found in high quantities in instant coffees, and referred to herein as hydrolysis volatiles. Furfural is especially prominent among these compounds and is considered herein as an indicator of the presence of hydrolysis volatiles in general. Furfural is a reaction product from the hydrolysis of 5-carbon sugars. It is present in detectable amounts in regular roast and ground coffees, but is present in much larger quantities in instant coffees, both spray dried and freeze dried, due to hydrolysis extraction.

The composition of this invention is both a coffee extract and a soluble coffee product comprising non-volatile coffee solids and volatile aroma and flavor compounds. This composition has levels of the key volatiles boiling at atmospheric pressure in the range of from about 88°C (190°F) to about 205°C (401°F) ("moderately volatile flavor compounds") which are at least substantially equivalent to the levels of those same volatiles in roast and ground coffee, on a gram for gram basis.

By "at least substantially equivalent to freshly brewed roast and ground coffee" is meant that the key moderately volatile compounds of the composition of this invention, on a gram for gram basis, average at least 100% or more of the levels of the same volatiles in conventional roast and ground coffee. Preferably, at least 150% of the level of those volatiles present in roast and ground coffee are present in the coffee of this invention.

The coffee extract and the solubles are further defined by the content of pyrazine derivatives and the ratio of furfural to pyrazines. The aroma and flavor compounds are steam distilled and extracted (with Freon 11) from the coffee extract or soluble coffee product. The relative amounts of the aroma and flavor compounds are then measured by capillary gas chromatography on a fused silica column. Each compound can be identified by its retention time on the column. Gas chromatography gives the relative proportions of the compounds in composition and can be related to the actual concentration of the compound in the composition.

The coffee compositions herein are defined by the minimum number of gas chromatographic counts (g.c. counts) of pyrazine derivatives and by the ratio of chromatographic counts of furfural to pyrazine derivatives. Gas chromatographic counts are the electronic output of the gas chromatograph.

By pyrazine derivatives are meant the following compounds: pyrazine, methyl pyrazine, 2,5-dimethyl pyrazine, 2,6-dimethyl pyrazine, 2,3-dimethyl pyrazine, 2-ethyl-6-methyl pyrazine, 2-ethyl-5-methyl pyrazine, 2,3,5-trimethyl pyrazine, and 2-ethyl-2,5-dimethyl pyrazine. These derivatives are defined by their retention times using the capilliary gas chromatographic method as described in the method herein. Figures 2A, 2B, 2C, 3A, 3B and 3C are typical chromatograms. The pyrazine compounds are denoted on each as follows: pyrazine (2); methyl pyrazine (4), 2,5-dimethyl pyrazine (6), 2,6-dimethyl pyrazine (8), 2,3-dimethyl pyrazine (10), 2-ethyl-6-methyl pyrazine (12), 2-ethyl-5-methyl pyrazine (14), 2,3,5-trimethyl pyrazine (16), and 2-ethyl-2,5-dimethyl pyrazine (18). Furfural is identified as (20).

The compositions herein have a gas chromatographic count of at least 20,000 for pyrazine derivatives and preferably about 30,000 to about 50,000 counts. Because of the presence of Freon 11 solvent and other impurities associated with the analytical method, the concentration of the volatiles is given in g.c. counts rather than percent volatiles. The ratio of furfural to pyrazine is less than 1.5:1, and preferably from about 0.4:1 to 1:1.

The total sulfur compound level is also measured by gas chromatography as described below. The level of these sulfur compounds approximates those in roast and ground coffee. The total sulfur compounds will be about 4,000 to about 15,000 by the method used herein.

Another characteristic of the coffee extract and coffee solubles is their ash content. Ash is the oxidation product minerals of which are present in the green coffee beans. The ash is measured by pyrolysis of the coffee sample. The minerals of the roast and ground coffee are easily extracted. Thus, the ash content of a soluble coffee or coffee extract can be used as a measure of yield of solids from the roast and ground coffee. The coffee extract and soluble coffee herein has an ash content, on a dry solids basis, of less than 12%, preferably less than 9%, and most preferably from 5% to 7.5%.

## II. The Process

### A. Green Bean Blending

The soluble coffee product of this invention is made by extraction of conventional roast and ground coffee. Because the product of this invention is designed to duplicate closely the flavor of freshly brewed roast and ground coffee, it will be evident that the starting blend of green beans and the roasting and grinding conditions will contribute importantly to the final product characteristics. While these parameters are more important than is usual in making soluble coffee, they are not critical.

Three major types of green coffee beans are blended to formulate a coffee blend for subsequent roasting. These three types of coffee are milds, Brazilians, and Robustas. Botanically, the milds and Brazilians are traditionally thought of as Arabicas.

The milds give coffee brews which are fragrant and acidic. The Brazilian beans result in coffee brews which are relatively neutral flavored. The Robusta beans produce brews with strong distinctive flavors that possess varying degrees of dirty or rubbery notes.

Traditionally, the milds are the most expensive of the three types of beans, with Brazilians being of intermediate expense, and Robustas being least expensive.

Since the flavor of the coffee blend is more prominent in the soluble product of this invention than in conventional soluble products, more care must be taken in formulation of the blend. For example, conventional instant coffees are often made using high levels of Robustas, which are less expensive and yield more solubles but have poorer flavor characteristics. The blend of coffees used in the process of this invention preferably contains lower levels of Robusta coffees. If it is desired to use a major proportion of Robustas, then at least a portion of the Robustas should be "upgraded" by techniques known to the art, such as those described in U.S. 3,640,726, issued February 3, 1972 to Bolt et al., and U.S. 4,234,613, issued November 18, 1980 to Lewis. However, some persons prefer a heavier, more robust coffee flavor and could use a higher level of Robustas.

Decaffeinated beans can be used to make a decaffeinated soluble coffee or decaffeinated coffee extract. Blends of decaffeinated beans with undecaffeinated or partially decaffeinated beans will provide a low caffeine coffee extract or soluble coffee.

## B. Roasting and Grinding

A variety of roasting techniques known to the art can be used to roast the green coffee in the process of this invention. In the normal operation of preparing conventional roasted and ground coffee, coffee beans are roasted in a hot gas medium whereby the coffee bean temperature is raised to a temperature of from about 176.6°C (350°F) to about 218°C (425°F) with the time of roasting being dependent on the flavor characteristics desired in the coffee beverage when brewed. Where coffee beans are roasted in a batch process, the batch roasting time at the hereinbefore given temperatures is from about 2 minutes to about 20 minutes, preferably about 6 minutes. Where coffee beans are roasted in a continuous process, the residence time of the coffee beans in the roaster are from about 30 seconds to about 9 minutes, preferably about 5 minutes. The roasting procedure can involve static bed roasting as well as fluidized bed roasting.

In roasting green coffee for conventional instant coffee extraction, darker roasts are commonly used. This is done to develop strong but somewhat harsh flavors which can survive conventional instant coffee processing. Because the process of this invention provides much better carry-through of roast flavor, this process does not require darker roasts. Lighter roasts can preferably be used to provide a flavor that is not burnt-tasting, yet strong. The lighter roasts also produce clearer, reddish cup colors. Additionally, the lighter roasts do not develop as much of the dirty, rubbery note in the Robusta coffees as would a darker roast. Thus, the blended beans are roasted to a Hunter "L" color of from about 18 to about 27, but preferably about 22 to about 26. The Hunter Color "L" scale values utilized herein to define the color of coffee beans and the degree to which they have been roasted are units of color measurement in the Hunter Color system. That system is a well-known means of defining the color of a given material. A complete technical description of the system can be found in an article by R. S. Hunter, "Photoelectric Color Difference Meter", J. of the Optical Soc. of Amer., 48, 985-95 (1958). Devices specifically designed for the measurement of color on the Hunter Color scales are described in U.S. Patent No. 3,003,388 to Hunter et al., issued October 10, 1961. In general, it is noted that Hunter Color "L" scale values are units of light reflectance measurement, and the higher the value is, the lighter the color is since a lighter colored material reflects more light. In particular, in the Hunter Color system the "L" scale contains 100 equal units of division; absolute black is at the bottom of the scale (L = 0) and absolute white is at the top (L - 100). Thus, in measuring degrees of roast, the lower the "L" scale value the greater the degree of roast, since the greater the degree of roast, the darker the color of the roasted bean is. The use of the Hunter Color "L" scale value provides an accurate and reproducible means for measurement of degree of roast. The Hunter Color "L" scale values herein are measured utilizing ground beans, the grind size being through 12-mesh U.S. Standard Sieve Series and more than 75 weight percent on 30-mesh U.S. Standard Sieve Series. With roasted beans, the level of moisture in the beans is adjusted to below 7 weight percent if not already at that level, before color measurement.

Grinding of the whole roasted coffee can be done in any of the ways known to those skilled in the art. In the process of this invention, finer coffee grinds are preferred to allow the most efficient fresh extraction possible. Efficient fresh extraction is important in this invention to minimize as much as possible the carryover of low-temperature extractable solubles into the hydrolysis section of the train. If they are carried into the hydrolysis section, they will be thermally degraded and produce instant coffee off-flavors.

### C. Extraction

The roast and ground coffee is extracted with water to form a fresh coffee extract. The extracted coffee is hydrolyzed and extracted to produce an hydrolyzed extract. Any conventional coffee extraction and coffee hydrolysis process can be used herein. Most commercial extraction processes use a coffee extraction train and, therefore, this type of process will be used to illustrate the invention.

Water is passed countercurrently through a coffee extraction train consisting of a series of extraction columns filled with roast and ground coffee. The operation of such a system is well understood and many modifications and variations will be apparent to those skilled in the art from the description and examples that follow.

A plurality of extraction columns filled with roast and ground coffee are connected in series by piping between the individual columns. Typically, six columns are found in the countercurrent extraction system, and therefore this description is given with reference to a six-column system. The last three columns, i.e., those containing the most nearly spent coffee grounds, are referred to collectively as the hydrolysis columns, while the next two columns which contain coffee grounds of an intermediate degree of spentness, together with the first column which contains the freshest coffee grounds, are referred to as the fresh extraction columns. As above noted, the extraction columns are intended to be used with roast and ground coffee; however, it should be realized that they can be adapted to the extraction of whole coffee beans.

Water enters the column containing the most nearly spent coffee grounds at the lower extremity of the column and is discharged at the top of the column. The outlet line from one column is connected to the inlet line of the next column. The extracting fluid progresses from column to column in the series entering each column at the bottom and being discharged from the top. Heat exchangers can be fitted in the lines between the columns immediately prior to the extraction liquid inlet to the columns. The heat exchangers can be used when required to achieve or to maintain the hydrolysis temperature, i.e., about 300°F to 380°F in the hydrolysis columns of the extraction system. They can also be used in the extraction columns to cool or to heat the extraction liquid to any desired extracting temperature, i.e., usually within the range of from 37.8°C (100°F to 137.8°C (280°F). Each column is fitted with a means for charging the column with roast and ground coffee, for discharging the coffee from the column, and for keeping the coffee in the column during the overall extraction cycle. The column which the extract liquor enters just prior to being withdrawn from the system contains the freshest coffee.

In most systems, at least one extra column is provided in each series so that the extraction operation is not interrupted while the most nearly spent coffee column is being emptied and refilled. The extra column is a standby column which is cut into the system either slightly before or simultaneously with the removal of the most nearly spent coffee column. Additional extra columns are usually available to allow operation of an extraction train of more than six columns, if desired.

In the operation of a coffee extraction system, aqueous extract is drawn off at a draw-off ratio of about 1 to 3. As is well known to those skilled in the art, the draw-off ratio is the amount of extract withdrawn from the fresh extraction column compared to the average weight of coffee in the individual columns. Preferably, a draw-off ratio of 1.5 to 2.5 is employed in the process of this invention.

After extract draw-off from the fresh extraction column is complete, a new column containing fresh roast and ground coffee is cut into the system with the original fresh extraction column becoming the next succeeding stage, and so on to the point where the column that originally contained the most nearly spent coffee is removed from the system. The column removed from the system is cleared of the spent coffee grounds and charged with fresh roast and ground coffee to become the standby fresh extraction column. The cycle time is defined as the time interval between successive draw-offs of final extract. The cycle time of this process can vary from about 15 minutes to about 1 hour. In the practice of this invention, a cycle time of about 30 minutes is preferred. The cycle time also corresponds to the interval between other operating steps besides draw-off; for example, it also corresponds to the time interval between the exposure of coffee in one coffee column to hydrolysis, and the exposure of coffee in the next fresher column, to hydrolysis temperature.

The fresh extraction temperature profile is preferably relatively steep, i.e., the extraction temperatures should range from about 50°C (122°F) to about 99°C (210°F), to allow for efficient fresh extraction. This is generally achieved by starting extraction at a relatively low temperature and increasing the extraction temperature to near that of boiling water. The relatively mild fresh column temperature 50°C (122°F) is preferred to extract heat sensitive components early in the extraction process, to avoid thermal degradation. The steep profile, up to 98.9°C (210°F), in only four columns, is preferred to extract as much as possible of the fresh solubles. As described in the case of the use of finer coffee grinds, efficient fresh extraction is important in this invention to minimize as much as possible the carry-over of low temperature extractable solubles into the hydrolysis section of the train.

The hydrolysis extraction temperature profile is preferably relatively mild. That is, the temperatures should be high enough to effect hydrolysis, generally in the range of from about 154°C (310°F) to about 166°C (about 330°F), but low enough to avoid excessive thermal degradation of the coffee, which can occur at higher temperatures.

D. Removal of Hydrolysis Volatiles

In the practice of this invention, the coffee extract issuing from the last hydrolysis column of the extraction train (i.e., immediately preceding the fresh extraction columns) is referred to as a hydrolysis extract. In making the coffee product of this invention, the hydrolysis extract is multistage or countercurrently steam-stripped to thoroughly remove volatiles created during the hydrolysis stage of the extraction process. The resulting stripped hydrolysis extract is then passed through the fresh extraction columns, preferably in a countercurrent manner.

The steam stripping process of this invention can be practiced in a variety of ways known to the art. Typically, the stripping is accomplished at temperatures of from 38.9°C (102°F) to 108.9°C (228°F) and pressures of 1 to 20 psia. The mass ratio of steam to extract is from 0.3 to 10, and most preferably from 0.5 to 1.5. Evaporation, which involves boiling the extract, does not efficiently or effectively remove the volatiles which multistage or countercurrent steam stripping removes. Importantly, this steam stripping removes furfural very effectively. Furfural is representative of the hydrolysis volatiles. Removal of furfural indicates that the off-flavors are also being removed.

In a preferred method, hydrolysis extract leaves the hydrolysis section of the extraction train and is sprayed into the top of a vacuum chamber. The feed temperature of the extract must be at or above the boiling point of water at the pressure of the stripping chamber. Otherwise, steam in the chamber will condense onto the extract droplets and reduce the efficiency of the stripper. As the extract falls through the chamber, it is met with an upflow of steam introduced into the bottom of the chamber. The extract is removed from the bottom of the chamber, and the steam, along with the hydrolysis volatiles stripped from the extract, is drawn from the top of the chamber and collected in a condenser for appropriate disposal. It will be appreciated that in the process described, the steam flows countercurrent to the extract. This results in highly efficient and effective removal of hydrolysis volatiles from the extract.

In another method, the extract is successively sprayed into and collected from a series of stripping chambers, with fresh steam introduced into each chamber. In such a process it is not critical that the steam flow countercurrent to the extract, because the gradient for removal of hydrolysis volatiles is re-established in each successive chamber. This method offers certain advantages and is thus also preferred although it is less energy efficient than a strict countercurrent stripping process. The stripping process can be conducted at any desired pressure.

Atmospheric pressure is preferred for simplicity of equipment design and operation, but sub- or superatmospheric pressures can be used.

In another method, somewhat less preferred, the extract is drawn off not between the fresh and hydrolysis sections of the train, but in position further forward in the train. For example, an extraction train with the following profile is being used:

| | Hydrolysis | | | Fresh | | | |
|---|---|---|---|---|---|---|---|
| Column No. | 1 | 2 | 3 | 4 | 5 | 6 | 7 |
| Temp., °F | 330 | 320 | 310 | 210 | 180 | 150 | 120 |

The extract steam stripping column would be used to strip the extract leaving column 4 and entering column 5. Alternatively, it would be used to strip the extract leaving column 5 and entering column 6. This relocation of the stripper has the following advantages: (1) It allows tar-like materials, which emerge from the hydrolysis section along with the hydrolysis extract, to be filtered out in the colder, fresh columns of partially spent roast and ground coffee, before the materials enter the stripping column; and (2) It allows any volatile off-flavors produced in the hotter, fresh columns to be stripped away.

The number of countercurrent contacting stages will have a marked effect on effectiveness of off-flavor removal in the stripper. A multi-stage stripping system is highly preferred. Other less efficient steam stripping methods can be used, but are not preferred. After steam stripping, the stripped hydrolysis extract is fed countercurrently through the fresh extraction columns as described above, and the final extract is drawn off the freshest column. The distillate or condensate which results from the steam stripping operation is discarded. By "discarded" is simply meant that the stripper condensate is not used for coffee processing.

E.   Concentration of the Extract

The fresh soluble flavor of the soluble coffee of this invention is more sensitive to change and variation than typical instant flavor. Therefore, after leaving the extraction train, the coffee extract of this invention is processed in a manner which preserves the volatile compounds, particularly the low and moderately volatile compounds, and avoids substantial thermal degradation of those volatiles. In this context it is also important to note the interdependence of the stripping operation and the post extraction processing. In particular, if the stripping is not performed to remove hydrolysis-generated off-flavor volatiles, the careful post-extraction processing will actually produce an inferior coffee by concentrating off-flavor materials in the product. Conversely, if the stripped extract is processed by conventional post-extraction techniques, such as thermal evaporative concentration, the resulting coffee product will be remarkably flat, since most of the flavor of conventional instant coffees is provided by the hydrolysis volatiles, due to the absence of authentic moderately volatile compounds which are lost during conventional processing.

After the extract issues from the extraction train, it is preferably concentrated to a solids concentration of at least 35%. For the concentration step, a concentration technique which does not involve substantial loss of aroma and flavor volatiles is essential. Freeze concentration is a highly preferred process. Freeze concentration is accomplished in a manner in which the water is removed as substantially or essentially pure ice crystals. Adhering or occluded compounds must not be present in the ice and must not be removed with the ice.

A preferred embodiment of a concentration process involves a freeze concentrator which has a scraped-wall heat exchanger connected to an adiabatic recrystallizer tank. The recrystallizer tank allows water to recrystallize and ice crystals to grow in size under conditions which form pure ice. A filter at the exit of the tank retains all crystals of more than 100 microns in size. This insures that most ice nuclei are retained for recrystallization. The recrystallized ice is separated from the concentrated extract by the use of a wash column. The wash column rinses any adhering concentrate from the ice crystals, and expedites removal of essentially pure ice from the freeze concentrate. A preferred apparatus for use in freeze concentration is the Grenco freeze concentration unit. This unit is described in U.S. 3,777,892, issued to Thijssen in 1973; U.S. 3,872,009, issued to Thijssen in 1975; and U.S. 4,004,896, issued to Thijssen et al. in 1977.

Other freeze concentration approaches that can be used herein are those which have been developed by CMC Concentration Specialists, Inc., and Chicago Bridge and Iron Works.

Other concentration methods which minimize loss of volatiles, such as other freeze concentration processes, membrane concentration, reverse osmosis or sublimation concentration involving slow freezing and slow water removal, can be used but are less preferred. Combinations of any of the foregoing concentration methods can also be used.

As mentioned, concentration of the extract is carried out until the extract has a "solids" content of at least 20%, preferably at least 35% and most preferably at least 40% by weight. For the purposes of this invention, the term "solids" is defined to encompass any and all materials in the extract or concentrate other than water. It thus includes a number of organic compounds which are volatile liquids under normal conditions of temperature and pressure. It is important to note that when the extract has been concentrated to, for example, 60% solids, water is actually a minority species in the concentrate. Because of the organic nature of most of the solids, these high solids concentrates behave more like organic solutions than aqueous solutions, and this effect enhances volatile retention during subsequent processing.

The extract can be decaffeinated either before or after the extract concentration. Liquid/liquid decaffeination of coffee extract processes are well known. See, for example, Morrison, Elder & Phillips, U.S. Patent 4,409,253.

The coffee extract or concentrated coffee extract can be pasteurized, frozen or aseptically packaged. The extract or concentrate can be aromatized or flavored with natural or artificial sweeteners, cream or artificial creamers, natural or artificial flavors, such as herbs and spices. Preservatives such as antioxidants or mold inhibitors can be added to the extract, as can be antifoaming agents.

F. Preparation of Soluble Coffee Product

The extract produced in this invention can be dried to a moisture content of from about 1% to about 8% by weight, and preferably from about 3% to about 5% by weight. This is a dry soluble coffee powder. The extract can be dried in any known manner to provide a dry soluble coffee product. The drying method should be designed to retain volatiles. Freeze drying or other known moisture-removal processes which preserve volatile compounds can be used.

If the resultant dry product is not in the form of particles, it can be broken up by a number of methods to form instant coffee particles. A preferred economical method for drying the aqueous extract is spray drying wherein the liquid extract is sprayed into a tower and simultaneously contacted with a flow of heated air. Water is removed from the droplets of the aqueous coffee extract as they fall through the spray tower and they emerge from the bottom as porous, spherical particles of instant coffee containing, for example, from about 1.5% to about 5.0% by weight moisture. (Typical disclosures of spray drying processes which can be used to prepare instant coffee particles can be found, for example, in Sivetz & Desrosier, "Coffee Technology", Avi Publishing Co., Westport, Conn., 1979, pp. 373-433, and in U.S. Patents Nos. 2,771,343 to Chase et al., issued on Nov. 20, 1956; 2,750,998 to Moore, issued on June 19, 1956; and 2,469,553 to Hall, issued on May 10, 1949.)

Preferably, the spray drying is conducted under conditions which maximize volatile retention and minimize thermal degradation or oxidation of the soluble coffee. The extract feed temperature to the drier is preferably in the range of from about 15°C (60°F) to about 38°C (100°F). Air flows and air temperatures which produce inlet and outlet temperatures of from about 121°C (250°F) to about 204°C (400°F) and from about 82°C (180°F) to 121°C (250°F), respectively, are preferred. An inert gas atmosphere can be used to minimize possible oxidative effects.

Freeze drying can produce superior volatiles retention, compared to spray drying, but is also more expensive. Typical disclosures of freeze drying processes which can be used can be found in Sivetz and Desrosier, cited above, at pp. 484-524.

After drying, the soluble coffee of this invention can be pelletized or agglomerated to improve its handling and dissolution characteristics. It can also be aromatized to supply additional high volatiles, i.e., those boiling at temperatures below about 88°C. These volatiles can be supplied by practice of any of the many aromatization techniques known to the art. Preferred aromatization techniques include those described in U.S. 4,335,149, issued June 15, 1982 to Stipp, and Reissue Patent 31,427, reissued October 25, 1983 to Lubsen et al. Other aromatization techniques are described at pp. 434 to 483 of the Sivetz and Desrosier text cited hereinabove.

This soluble product can also be milled into flakes or agglomerated. U.S. 3,652,293, issued to Lombana et al. (1972) describes such products. The dried soluble coffee of this invention can be packaged, with or without agglomeration and with or without aromatization, for use as an instant coffee product.

III. Coffee Brewing Mixtures

However, a preferred use of the soluble coffee of this invention is in combination with roast and ground coffee. A particularly preferred product provides the soluble coffee of this invention and roast and ground coffee in a soluble:roast and ground ratio of from 1:4 to 1:1 by weight. A particularly preferred product is a permeable bag containing from about 1 to about 2.5 grams of soluble coffee and from about 1.5 to about 5 grams of roast and ground coffee. Combined in these ratios in such a product, each component contributes to a positive overall product perception. The roast and ground portion provides practically all of the coffee aroma during opening of the package and before brewing. It also contributes noticeably to the brewing aroma during preparation and cup aroma. The soluble portion provides most of the unique flavor of the solubles of this invention, and 75% or more of the product brew solids and titratable acids.

In general, finer grinds of roast and ground coffee will provide better extraction, although a tradeoff with plugging of bag pores must be made when extremely fine grinds are used. If desired, the roast and ground coffee component can be flaked or milled to increase its extractability. Examples of this can be found in U.S. 3,615,667, issued in 1971 to Joffe, U.S. 3,640,727, issued in 1972 to Heusinkveld; U.S. 3,660,106, issued in 1972 to McSwiggin; U.S. 3,769,031, issued in 1973 to McSwiggin; Canadian 989,246, issued in 1976 to Bergeron and Schlichter; U.S. 4,110,485, issued in 1978 to Grubbs et al.; U.S. 4,267,200, issued in 1981 to Klien and Gieseker; and U.S. 4,331,696, issued in 1982 to Bruce.

The roast and ground coffee component can also be fast roasted to provide an expanded cellular structure and improved extractability. U.S. 3,088,825, issued in 1963 to Topalian and Luddington; and U.S. 3,122,439, issued in 1964 to McAllister and Spothaltz, disclose processes for the fast roasting of coffee. The '439 patent also discloses that fast roasted coffee can be flaked.

The coffee article of this invention can be made of any water-permeable infusion material. A metal container with small holes, such as a "tea ball", can be used for brewing the soluble coffee, roast and ground coffee combination. Other articles include plastic, metal or wooden spoons covered with a water-permeable infusion material. For ease of manufacture and economical delivery, the preferred article is a water-permeable infusion bag.

Also, particularly preferred is a brewing article containing roast and ground coffee and the soluble coffee of this invention in which the soluble coffee, the roast and ground coffee, or both, are milled into flakes. Flaking of the coffee squeezes out air and other gases and makes the coffee more dense. The result is that a coffee brewing bag using this mixture will be significantly less buoyant than a coffee bag not containing flaked coffee. A less buoyant bag results in faster brewing and more convenience during coffee preparation. An added benefit is that a mixture of soluble flaked coffee and roast and ground coffee flows easily when filling bags on a packing line.

The coffee can be milled by any means, but a preferred method is by passing it through a two roll pressurized flake mill using about 400-500 psig pressure and about 20 to 30 rpm at zero gap between the rolls. U.S. 4,267,200, issued to Klien and Gieseker, describes milling. The milling method is incorporated by reference herein. The soluble flaking operation may include an addition of coffee oil to the powder to aid in roll lubrication and flake strength. Alternately, the soluble coffee and the roast and ground coffee can be milled together, with the oil coming from the roast and ground coffee.

When the coffee article is used, most of the fresh solubles are dissolved after 30-45 seconds, delivering about 1.0% solids concentration in 200 ml of water. Extraction of the roast and ground coffee continues until a concentration of about 1.15% to 1.30% is reached after about 3 minutes of brewing. With this product composition, the coffee extraction is non-linear, with very high extraction rates during the initial 15 seconds or so of extraction, slower rates for about the next 30 seconds, but then only slight concentration changes during the next several minutes if brewing is continued.

The preferred coffee article of this invention can be formed from both nonwoven and woven fabrics. Included within the class of nonwoven and woven fabrics are synthetic fabrics made of rayon, nylon, polyesters, polyacrylic and polypropylene fibers and natural fibers made of hemp and cotton fibers. In addition, it will be appreciated that combinations of fibers can be used to prepare the fabrics suitable for use as the pouch material of the coffee bag of this invention, e.g., where greater fabric strength or increased fabric porosity is desired. Particularly preferred are the nonwoven fabrics comprising fibers of rayon, nylon, polypropylene, and hemp and mixtures thereof. It is immaterial for the purposes of this invention the type of fiber used as the water-permeable material for forming the pouch so long as it is chemically inert, essentially taste-free and sufficiently strong to remain an integral unit throughout normal handling, packaging, shipping of the coffee bag, brewing of the coffee beverage, and disposing of the used packet.

It is essential that the fabric used for preparing the coffee bag be permeable to water. Yet the pores in the fabric allowing water permeability should be of such a nature and size that the roast and ground coffee particles present in the bag do not pass through with the brewing water. The fabric must act as a filtering means to accomplish the objectives of preventing the formation of sediment in the brewed coffee. The fabric thickness used can vary but will generally range from about 0.002 in. to about 0.012 in., preferably from about 0.003 in. to about 0.009 in.

The size of the pores in the pouching material used in making the coffee article of the present invention can vary in size from about 5 microns to about 1000 microns, preferably from about 20 microns to about 200 microns. If a substantial portion of the pores are smaller than approximately 5 microns, it may be impossible, irrespective of time, to extract all of the desired flavor components and constituents from the coffee in the article into the brewed beverage since smaller pore sizes tend to clog during brewing of the coffee beverage. Where the pore size is extremely fine inordinately long brewing times are needed. Pore openings larger than about 1000 microns are to be avoided since they permit passage of coffee fines into the beverage resulting in a high level of sediment. In addition, pore sizes larger than about 1000 microns will allow the smaller particles to sift out on agitation, as for example on shipping, and a dusty coffee packet having an undesirable appearance can result.

At least a portion of the coffee article can be an apertured or formed film, rather than a fabric. Such materials, and methods for making them, are described in U.S. Patents 4,151,240, issued April 24, 1979 to Lucas and VanConey, and

4,342,314, issued August 3, 1982 to Radel and Thompson. In general, the criteria for selection of materials and aperture sizes for formed films are the same as those described above as applicable to fabrics.

The preferred article of this invention is simply and easily made. All that is necessary is to form a pouch out of the water-permeable materials hereinbefore described to contain the coffee. This can be done by "drawstring" means whereby the bag is gathered at one end or by stitching the material together to form the bag. A preferred embodiment of this invention involves heat sealing the water-permeable material to form a bag. In this preferred embodiment the heat sealing is accomplished through the use of a heat-sealing binder. Binders which are acceptable for heat sealing are those binders having a melting point lower than the softening or charring point of the bag material but a melting point higher than the temperature of boiling water. In addition, the binder, similar to the bag material, must be chemically inert and essentially taste-free. It is important that the binder be sufficiently inert and insoluble in hot water so that no adverse physiological effect from consumption of the coffee beverage can result. Examples of suitable binders for heat sealing of the bag materials described above are the polymeric binders, as for example, the polymeric binder described in U.S. Patent No. 3,183,096, issued to Hiscock (1965).

The coffee article of this invention can be of any shape that will contain the roast and ground and soluble coffees. The shape to be used may be determined to a certain extent by the brewing method employed. The coffee article of this invention can be brewed in any type of vessel. After brewing, the coffee article containing the spent roast and ground coffee particles may be easily disposed of as a unit.

In addition to packaging the roast and ground coffee and soluble coffee of this invention in a coffee article, the mixture of the two coffees can be pelleted or tableted for convenient handling. The pellets or tablets are preferably used in a brewing device with a filter to retain the extracted roast and ground coffee.

The methods for brewing coffee with the coffee bag of this invention are numerous. A coffee beverage can be brewed by placing the coffee bag in a cup or pot of water which has been brought to a boil and allowed to cool just slightly (to about 160°F to about 210°F) and the coffee bag steeped in the hot water for from about 0.3 minutes with agitation of the bag to about 6 minutes with little or no agitation of the bag. The bag can then be removed and disposed of. A coffee beverage can also be prepared using a suitably shaped coffee bag of this invention and methods and equipment in general use for brewing a coffee beverage.

### Gas Chromatographic Method

**Capillary Gas Chromatographic Analysis of Volatile Coffee Components Separated and Concentrated by Simultaneous Distillation and Extraction (SDE-CGC)**

**A. Principle**

The steam distillation/extraction method of Schultz et al., J. Agric. Food Chem., 25, 446-449 (1977) has been applied to the analysis of volatile components of coffees. The first step is simultaneous distillation and extraction (SDE). Figure 4 is a drawing of the apparatus used for this process. The volatile components are steam distilled from a coffee sample. These volatiles are co-condensed with Freon 11. The volatile components are extracted by the Freon 11. The co-condensed water and Freon 11 are allowed to separate and returned to their respective flasks. Thus, the volatile components are extracted and concentrated in the Freon 11. After ninety minutes the volume of Freon is reduced by evaporation and methylene chloride (dichloromethane) is added to reduce the loss of extracted volatiles prior to evaporation to a specific volume. The extract is not allowed to evaporate to dryness.

The extract obtained by SDE is analyzed by capillary gas chromatography (CGC) using a Hewlett-Packard 5880A Gas Chromatograph and fused silica columns. A DB5 column is used with a flame ionization detector (FID) to detect the carbon and hydrogen in volatile compounds in the SDE extract. A CP-57-CB column is used with a flame photometric detector (FPD) to detect sulfur-bearing volatile compounds. The injected sample is split between the two columns. Two Hewlett-Packard level four data terminals are used to process the data, giving retention times, peak areas and area percents. The methylene chloride (solvent) peak is excluded from the data. Additionally, a total of six other peaks which are considered to be "artifacts of the method" are excluded from the numerical data. However, they do appear on the chromatograms. They are detectable on a blank analysis. These peaks represent impurities in the methylene chloride and Freon 11, and constituents of the antifoam.

So far, 27 compounds in the separated coffee volatiles have been identified by the SDE-CGC method: isobutyraldehyde, methyl ethyl ketone, diacetyl, 2,3-pentanedione, pyrazine, pyridine, pyrrole, dihydro-2-methyl-3(2H)-furanone, methyl pyrazine, furfural, furfural alcohol, aceto acetate, 2,5-dimethyl pyrazine, 2,6-dimethyl pyrazine, 2,3-dimethyl pyrazine, 5-methyl furfural, furfural acetate, 2-ethyl-6-methyl pyrazine, 2-ethyl-5-methyl pyrazine, 2,3,5-trimethyl pyrazine, 5-methyl pyrrole-2-carboxaldehyde, 2-ethyl-2,5-dimethyl pyrazine, guaiacol, 2-(2-furan methyl)-5-methyl pyrrole, ethyl guaiacol, vinyl guaiacol.

The data obtained by the SDE-CGC method are sufficiently accurate and precise to be valid for a comparison of differences in composition of coffee samples.

B. Sample Preparation

Coffee weighing 10.000 ± 0.005 grams is placed into a 500 ml. flask. Two hundred ml. of distilled water is added. Then 3 ml. of internal standard solution and 3 boiling stones are added. (With instant coffee, 3 drops of Antifoam B are also added.)

C. Internal Standard Preparation

First, 0.0100 ± .00005 grams of 2-acetyl pyrazine are weighed and placed into a clean, dry 100 ml. volumetric flask. Then sufficient methylene chloride is added to fill the flask to ·100 ml.

## D.  SDE Procedure:

1.  The apparatus is set up as shown in Figure 4.

The apparatus includes a sample flask 214 and a solvent flask 218.  The sample flask 214 is heated by a stirrer-hot plate 222 while flask 218 is heated by hot plate 224.  Positioned on top of flask 214 and 218 is a steam distillation/extraction (SDE) column 226 which includes a sample vapor column 228 which receives vapors from the coffee sample and a solvent vapor column 232 which receives vapors from flask 218.  The top sections of the vapor columns 228 and 232 are joined to condenser column 244.  Mounted on top of condenser column 244 is a Dewar condenser 248 provided with a core 250 for receiving coolant.

Condenser column 244 is provided with a water inlet 252 and a water outlet 254 for the circulation of water through a first cooling system 256 which cools core 258 of column 244.  Column 244 is also fitted with a second water inlet 260 and a second water outlet 262 for circulation of water through a second cooling system indicated by 264 which cools the periphery 266 of column 244.

Vapors which condense in core 258 and along periphery 266 are collected in U-tube 268 connected to the bottom end of condenser 244.  Tubing section 272 connects trap 268 to sample column 228 for passage of condensed vapors to flask 214.  Tubing section 276 connects trap 268 to solvent column 232 for passage of condensed vapors to flask 218.  The cooling water is circulated through systems 256 and 264 and the Dewar condenser core 250 is filled with dry ice.

2.  The Freon 11 is redistilled before using it.  About 150 ml. of Freon is collected in a 250 ml. flask 218 to be used as the extracting solvent.

3.  The Freon 11 is drained from the U-tube 268 when the liquid level reaches the "Y" part 272 of the U-tube.

4.  The coffee sample is prepared while the Freon 11 is being redistilled.

5.  After the Freon redistillation is complete, the Freon is drained until the liquid level is in the middle of the "Y" junction.

6. Distilled water is added through the connection 278 where the Dewar condenser 250 fits onto the top of the water condenser 256, until the water liquid level reaches the bottom of the large outer water condenser 260.

7. Three boiling stones are added to flask 218 containing the redistilled Freon.

8. The 500 ml. flask 214 containing the coffee solution is connected.

9. Ice is added to a plastic reservoir which is then used to immerse U-tube 268.

10. Distillation is carried out for 1-1/2 hours after water vapor and Freon 11 begin condensing and collecting in U-tube 268.

11. The heat to the coffee solution in flask 214 and the Freon 11 in flask 218 is turned off at the end of the distillation period. After the coffee solution stops boiling, the distillation apparatus is disassembled.

12. The Freon 11 is drained out of U-tube 268 until the liquid level is at the Y-junction of the U-tube 268 and tube 272. It is then poured into a flask 218 with the rest of the Freon 11.

13. The Freon 11 is evaporated down to about 5 ml. under nitrogen on a steam bath set at 60°C (140°F) to 71°C (160°F).

14. Eight ml. of dichloromethane is added to the flask containing the Freon 11 and swirled.

15. The contents of the flask containing the Freon 11 and dichloromethane are evaporated down to about 3 ml.

16. A portion of the extract is transferred into a 2 ml. reaction vial.

17. The extract in the reaction vial is evaporated down to 1 ml. and portions of extract from the flask are added to the vial and partially evaporated to 0.5 ml. until the flask is empty. Two ml. of dichloromethane are added to the flask and swirled. The solvent wash from the flask is added to the reaction vial and partially evaporated to 0.5 ml. The extract in the reaction vial is evaporated to 0.3 ml. if it is to be injected into the gas

chromatograph; otherwise, it is evaporated to 0.5 ml. and put into a freezer until prior to g.c. injection, at which time it is evaporated to the 0.3 ml. level. The extract is not evaporated to dryness.

E.  Gas Chromatographic Analysis;
Conditions for the HP 5880A g.c.

| | | |
|---|---|---|
| Septum purge flow | : | 1 ml./min. |
| Inlet pressure | : | 26 psig |
| Vent flow | : | 30 ml./min. |
| Make-up carrier flow | : | 30 ml./min. |

FID:

| | | |
|---|---|---|
| Hydrogen flow rate | : | 30 ml./min. |
| Air flow rate | : | 400 ml./min. |
| Column flow | : | 3 ml./min. |
| Split ratio | : | 10/1 |

FPD:

| | | |
|---|---|---|
| Hydrogen flow rate | : | 75 ml./min. |
| Air flow rate | : | 50 ml./min. |
| Oxygen flow rate | : | 40 ml./min. |
| Detector temperature | : | 200°C |

Temperature Program

Oven temperature 25°C, limit of 405°C. The oven is heated at 25°C for 2.6 minutes.

The oven is then programmed to rise 20.0°C/min. to a temperature of 45°C. Then the oven rises at 3.0°C/min. to a temperature of 65°C. Then the oven rises at 2.0°C/min. to a temperature of 125°C. Finally the oven rises at 3.0°C to a temperature of 220°C. The oven is then heated to 230°C and held there for 15 minutes.

The DB5 gas chromatography column used to detect and separate the organic compounds are 60 meter columns of 0.322 mm. inner diameter. A film of crosslinked polyethylene glycols 1 micron thick is used. The DB5 column is available from J&W Scientific, Inc., Cardova, CA.

The CP-57-CB column used to separate the organic sulfur compounds is 25 micron in length and has an inner diameter of 0.33 mm. The CP-57-CB column is available from Chrompak Incorporated, N.J., Cat. No. 7763.  A film of CP-TM-Wax 57, a WSCOT fused silica column at 1.12 micron thickness is used.

The chromatograms are analyzed by determining area percent of each peak from the gas chromatographic counts (electrical impulses recorded).

The total gas chromatographic counts of the sample as obtained from the chromatogram are corrected to make all of the samples on the same basis for comparison.

The internal standard (2-acetyl pyrazine) is assumed to be 3000 counts based on the concentration added and the response factor.  A sample calculation is as follows:

Internal Standard as measured        2737

Pyrazines total 21,785

$21{,}785 \times \dfrac{3000}{2737} = 23{,}878$

Corrected pyrazine count is 23,878.


The furfural count is corrected in the same manner.

The furfural to pyrazine ratio is obtained by dividing the total furfural corrected g.c. counts by the total corrected pyrazine counts.

The total sulfur-bearing volatiles count is also corrected to make all samples on the same basis for comparison.

Ash Measurement

A sample of coffee extract or soluble coffee is weighed into a crucible.  The sample is then heated as follows:  heated from 20°C (68°F) to 400°C (752°F) in one hour; cooled to 200°C (392°F); then heated to 1000°C (1832°F) and kept at that temperature overnight (about 16-18 hours).  The percent ash is then determined by taking the weight of the final sample times 100 and dividing by the weight of the original sample.

## Example 1

The following example illustrates the process of this invention. Unless otherwise stated, all percentages are given on a weight basis.

A blend of 25% primes, 25% Brazils, 20% natural Arabicas, and 30% Robustas was roasted on a Thermalo roaster model 23RS. The roast size was 300 lbs. green coffee, and it was repeated three times. The results of the roasts are listed below:

|  | 1 | 2 | 3 |
|---|---|---|---|
| Roast time, minutes | 6.50 | 6.25 | 6.33 |
| Final temperature of roast, °F | 442 | 438 | 440 |
| Water quench level, % of green weight | 13.9 | 13.9 | 13.9 |
| Hunter L color | 21.1 | 22.1 | 21.9 |

The roasts were blended together to form a single whole roast lot. The whole roast was held at room temperature for about 8 hours before the start of grinding and extraction.

An 8-column extraction train and extract steam-stripping column, with associated pumps, heaters, coolers, and piping, was utilized. Once begun, the process was operated long enough to insure that a truly countercurrent progression of grounds and extract liquor exited before taking data and test extract draw-off. This was accomplished by sequentially adding columns to the process until the total was seven operating extraction columns plus the extract steam-stripping column. As the fresh column was put on-line into the system, the most spent column was taken out of the process, emptied, cooled, washed, and refilled to be used again. This procedure is known in the art as "startup".

The extraction columns are 0.5 ft. in internal diameter and 4.0 ft. high. As known to those skilled in the art, appropriate piping for feedwater and extracts is also used. The columns are also jacketed with a heating oil to prevent heat loss from the columns during operation. The temperature of the oil was adjusted per column approximately to match the inlet fluid

temperature, in a temperature profile as described later in this example.

The appropriate piping from and returning to the extraction allowed the use of an extract steam-stripping column (6 inches internal diameter, 20 ft. high, steam inlet at the bottom, extract inlet at the top, no internal packing, extract enters through a spray nozzle pointing down the column) to strip the hydrolysis volatiles from the hydrolysis extract. Thus, the stripping column stripped the extract leaving column 3 and the stripper bottoms became the extract which entered column 4. About 130 lbs. per hour of steam was fed to the stripping column which operated at atmospheric pressure. A feed temperature of about 230°F was used.

Grinding was done on a Gump model 33 coffee granulizer. The following is a typical particle size distribution:

| U.S. Sieve Screen | % |
|---|---|
| +6 | 8.4 |
| -6+8 | 41.4 |
| -8+12 | 25.6 |
| -12+16 | 12.6 |
| -16+20 | 6.0 |
| -20 | 6.0 |

After startup, the temperatures in the extraction train starting with the column containing the most spent coffee grounds and progressing to the fresh column, as measured at the inlet and outlet to each column, were as follows:

| | 1 | 2 | 3 | 4 | 5 | 6 | 7 |
|---|---|---|---|---|---|---|---|
| Inlet, °F | 334 | 319 | 310 | 246 | 181 | 150 | 119 |
| Outlet, °F | 316 | 307 | 261 | 195 | 151 | 127 | 131 |

The average column load of roast and ground was 20.3 lbs.

The pressure of columns 1, 2 and 3 was 150 psig. The pressure of columns 4, 5, 6 and 7 was near atmospheric. The draw-off ratio was 2.1 and the average cycle time was 30 minutes. The vapors and the extract from the fresh column were condensed and/or cooled to about 10°C (50°F). The fresh extraction column was exhausted through a chilled water heat exchanger to an open weigh tank. The percentage yield of solubles based on the roast and ground coffee was 39.0%. The resultant extract of this example contained 18.6% solubles. A sample of the extract was analyzed by SDE-FID and the results are contained in Table 1. The corrected g.c. area for the pyrazine derivatives is 12,037; the corrected g.c. area for furfural is 8,251; and the ratio of furfural to pyrazine derivatives is 0.64:1.

The extract was then filtered through a spiral wound cartridge filter rated at 15 micron openings. The filtered extract was chilled to about 2°C (35°F) and placed into a refrigerated storage tank.

A Grenco model W8 freeze concentration unit was fed from the refrigerated supply tank. The Grenco system is a closed system.

The refrigerator unit and recirculation pump circulating the extract from the recrystallizer through the scraped-wall heat exchanger were started and the extract was cooled down to about -1°C (30°F) and formation of recrystallized ice was achieved after about 2 hours. Removal of ice via the wash column started about 3 hours later. A concentration of about 40% dissolved solids was achieved after about 20 hours of operation. The unit was then drained of extract. The drained extract was then immediately spray dried, as described below. The Grenco was then recharged with fresh extract and the process was repeated.

The average age of the extract (from draw-off to drying) for the first freeze concentration run was about 36 hours. The age for the second run was about 24 hours.

The concentrated extract was dried on a co-current spray drier. The inlet extract temperature was about 16°C (61°F). The inlet air temperature was about 171°C (340°F). The outlet air temperature was about 93°C (200°F). The dried solids were collected at a rate of about 40 lbs. per hour, at a moisture of about 4.5%. This powder would have an ash content of about 7.0%.

A sample of the spray-dried powder was analyzed with both SDE-FID (for furfural and pyrazines) and SDE-FPD (for sulfur) to yield the data in Table 1 and Figure 2A, 2B, & 2C. The corrected g.c. area for the pyrazine derivatives is 36,343; the corrected g.c. area for furfural is 27,908; and the ratio of furfural to pyrazine derivatives is 0.77:1. The total corrected sulfur compounds is 10,994.

## · Example 2

A sample of a commercial freeze-dried premium-priced instant coffee was analyzed by SDE-FID and SDE-FPD, and the results are detailed in Table 1. The corrected g.c. area for the pyrazine derivatives is 12,474; the corrected g.c. area for furfural is 28,426; and the ratio of furfural to pyrazine derivatives is 2.28:1. The total corrected sulfur g.c. counts is 2,994.

## Example 3

A sample of a commercial spray-dried instant coffee was analyzed by SDE-FID and SDE-FPD, and the results are detailed in Table 1 and Figures 3A, 3B, & 3C. The corrected g.c. area for the pyrazine derivatives is 12,386; the corrected g.c. area for furfural is 64,428; and the ratio of furfural to pyrazine derivatives is 5.2:1. The total corrected sulfur g.c. counts is 4,424.

## Example 4

A sample of roast and ground coffee was analyzed by SDE-FID and SDE-FPD, and the results are detailed in Table 1. The corrected g.c. area for the pyrazine derivatives is 23,899; the corrected g.c. area for furfural is 12,876; and the ratio of furfural to pyrazine derivatives is 0.54:1. The total corrected sulfur g.c. counts is 12,953.

## Discussion of Examples 1 through 4

Example 4 shows the normal ratios of furfural to pyrazines in roast and ground coffee which is considered to be the target standard of composition for an instant coffee. These levels of furfural and pyrazines in roast and ground coffee have also been independently established by outside researchers. (Nakamichi, L., "Coffee Flavor", New Food Industry 25, No. 11, pp. 54-59, 1983.) Example 1 shows that an extract and a powder with a furfural to pyrazines ratio slightly higher than roast and ground coffee is obtained with the process of this invention. Example 2 shows how a commercial premium freeze-dried coffee has a much higher furfural to pyrazines ratio, and Example 3 shows an even higher ratio.

Regarding sulfur volatile intensities, it is apparent that the soluble coffee of this invention has a significantly higher level of sulfur volatiles than in conventional instant coffees, and the level is about equal to that of roast and ground.

## Example 5

A coffee bag was made by forming a single chamber bag of Dexter 2588 paper of the following specifications:

1. Heat sealing binder on one side of the paper.
2. Grammage: 24.6 g./m.$^3$
3. Air permeability:
   460 L/min./100 cm$^2$ @ 12.7 mm. $H_2O$   P
4. Tensile strength:
   dry machine direction   5300 g./25 mm.
   dry cross direction   1990 g./25 mm.
   wet cross direction   525 g./25 mm.
5. pH: 5.2

The bags were manufactured on a Hayssen vertical form filled seal machine. The dimensions of the bag were 2 inches wide by 2.75 inches long with a 1/4 inch heat seal on the bottom of the bag. The coffee (as described below) was placed into the bag. A 1/4 inch heat seal was made along the top of the bag. A

-37-

1/8 inch wide by 4-1/8 inch Mylar strip (with paper tag attached) was attached using a heat sealer to the top of the bag.

The roast and ground coffee was made from a blend of green coffee consisting of 55% milds, 25% Brazils and 20% Robustas. The coffee was roasted on a Probat Model UG22N batch roaster in a 50 lb. batch. The coffee was roasted to a Hunter L color reading of 21.6 in 8-1/2 minutes at a final roast temperature of 465°F. It was quenched at the end of the roast with water at a level of 11.7% of the initial load of green coffee. The whole roast was aged about 6 hours and the ground on a Gump coffee granulizer Model 66. The following is a typical particle size distribution:

| U. S. Screen | Range, Weight % |
|---|---|
| on 12 | 0-2 |
| through 12, on 16 | 12-20 |
| through 16, on 20 | 35-49 |
| through 20, on 30 | 18-30 |
| through 30 | 12-30 |

The coffee was then screened through a U.S. 12 mesh screen (to remove coarse particles) and on a U.S. 40 mesh screen (to remove fine particles). The coarse and fine fractions were discarded.

The soluble coffee was prepared much in the same way as in Example 1. The soluble coffee was then milled on a Lehman mill Model 4X8, to form flakes. The flakes were sized through a U.S. 7 mesh screen (to remove large flakes) and on a U.S. 30 mesh screen (to remove fines). The coarse and fines were recycled through the mill. The flaked and sized solubles were mixed with the sized roast and ground coffee in a ratio of 2.0 parts solubles and 3.5 parts roast and ground. The coffee bag was packed with 5.5 grams of this mixture. The mixture of roast and ground coffee and dried powder coffee was analyzed by SDE-FID and SDE-FPD, and the results are detailed in Table 1. The corrected g.c. area for the pyrazine derivatives is 27,857; the corrected

0159754

g.c. area for furfural is 22,992; and the ratio of furfural to pyrazine derivatives is 0.83:1.

A brew test of the bag was run. The bag was placed in 200 milliliters of 88°C (190°F) water in a cup for 1 minute. During this period the bag was occasionally dunked, using the mylar strip-tag to raise and lower the bag. The resulting brew contained 1.31% solubles. Organoleptic evaluation of the brew by an expert panel showed that, in the absolute, the brew tasted smooth and flavorful like fresh brewed coffee.

Volatiles Analysis Results

Table 1

| | Example 4 R&G Coffee | Example 1 Extract | Example 1 Dried Powder | Example 2 Commercial Freeze-Dried Coffee | Example 3 Commercial Spray-Dried Coffee | Example 5 R&G and Dried Powder Coffee |
|---|---|---|---|---|---|---|
| Corrected Furfural g.c. counts | 12,876 | 8,251 | 27,908 | 28,426 | 64,428 | 22,992 |
| Corrected Pyrazines g.c. counts | 23,899 | 12,037 | 36,343 | 12,474 | 12,386 | 27,857 |
| Furfural/Pyrazines ratio | 0.54 | 0.64 | 0.77 | 2.28 | 5.2 | 0.83 |
| Total corrected Sulfur g.c. counts | 12,953 | -- | 10,994 | 2,994 | 4,424 | -- |

This degree of removal can obviously, to those skilled in the art, be improved significantly by the use of additional stages in the countercurrent multiple stage stripper, or by a higher steam to extract ratio. In Example 1, a tall column spray stripper was used. A taller column would add extra contacting stages, for example. A 99.0% or better removal could be achieved. Thus, the stripping column allows almost total furfural removal from the hydrolysis extract.

## Example 6

Two samples of hydrolysis extract and a hydrolysis extract stripper condensate, which were obtained in runs conducted in a manner similar to that detailed in Example 1, were analyzed by SDE-FID, and the results are detailed in Table 2. Column A is the feed extract to the stripping column. Column B is the stripper extract leaving the bottom of the column. Column C, a hydrolysis extract stripper condensate, is a sample which typifies the composition of the strippate which is disclosed.

## Table 2

### Volatiles Analysis Results of Hydrolysis Extracts and Hydrolysis Condensate

#### Example 6

|  | Stripper Feed A | Stripper Bottoms B | Stripper Condensate C |
|---|---|---|---|
| Furfural | 30,205 | 1,491 | 30,451 |
| Pyrazines | 581 | 67 | 638 |
| % furfural | 52.0 | 6.7 | 57.3 |
| % pyrazines | 1.0 | 0.3 | 1.2 |
| Total corrected g.c. counts | 58,086 | 22,252 | 53,143 |

The results in Table 2 show that the hydrolysis extract steam-stripping column removes virtually all of the furfural present in the hydrolysis extract. The furfural is contained in the condensate from the stripping process and discarded. Few valuable volatiles are present in the feed to the stripping column, as evidenced by the low pyrazines levels, and thus little besides furfural is lost. The calculation below estimates the actual degree of removal of furfural:

Feed furfural      $58,086 \times .52 = 30,205$

Bottoms furfural      $22,252 \times .067 = 1491$

$100 \times [1 - (1491/30,205)] = 95.1\%$ removal

- 1 -

0159754

CLAIMS

1. A soluble coffee composition comprising volatile and non-volatile coffee solids, said coffee solids comprising:

a) volatile and non-volatile aroma and flavor compounds, at least two of furfural and pyrazine derivatives, said pyrazine derivatives having a g.c. count of at least 20,000, and the ratio of furfural to pyrazine derivatives being less than 1.5:1, wherein said g.c. counts are measured on a Freon 11 solution of separated volatiles by capillary gas chromatography on a fused silica column; and

b) the total composition having an ash analysis of less than 12%, on a dry solids basis.

2. A coffee composition comprising a mixture of the soluble coffee of Claim 1 with roast and ground coffee.

3. A coffee extract or concentrate comprising:

a) at least about 15% coffee solids, said solids comprising non-volatile and volatile aroma and flavor compounds, at least two of said aroma and flavor compounds being furfural and the pyrazine derivatives;

b) wherein the ratio of furfural to total pyrazine derivatives is less than 1.5:1, and wherein the total pyrazine derivatives have a g.c. count of at least 20,000, on a dry solids basis, wherein said g.c. counts are measured on a Freon 11 solution of separated volatiles by capillary gas chromatography on a fused silica column; and

c) wherein the total ash is less than 12%, on a dry solids basis.

4.    A composition according to Claim 2 wherein the ratio of soluble coffee to roast and ground coffee ratio is from about 1:4 to about 1:1 by weight.

5.    A composition according to Claim 4 wherein the roast and ground coffee is fast roasted and milled and wherein the soluble coffee is milled.

6.    A composition according to Claims 1, 2, 3, 4, or 5 wherein the pyrazine derivatives have a g.c. count of from about 30,000 to about 50,000 counts, on a dry solids basis.

7.    A composition according to Claims 1, 2, 3, 4, 5 or 6 wherein the furfural to pyrazine derivatives ratio is from about 0.4:1 to about 1.0:1.

8.    A composition according to Claims 1, 2, 3, 4, 5, 6 or 7 wherein the composition contains sulfur compounds having a g.c. count of from about 4,000 to about 15,000, on a dry solids basis.

9.    A process for making a coffee extract comprising the steps of:
    (1)    forming a hydrolyzed roast and ground coffee extract;
    (2)    multistage or countercurrently steam-stripping the hydrolysis extract to remove hydrolysis volatiles;
    (3)    discarding said hydrolysis volatiles; and
    (4)    passing the stripped hydrolysis extract through roast and ground coffee at a temperature of from about 138°C (280°F) to about 21°C (70°F) to produce a coffee extract.

10. A process according to Claim 9 wherein the steam stripping is conducted in a multi-stage steam stripper, at a mass ratio of steam to hyrolysis extract of from about 0.3:1 to 10:1.

11. A process according to Claim 10 wherein the steam stripping is conducted at temperatures of about 102°F to about 228°F and pressures of about 1 psia to about 20 psia.

12. A process according to Claims 9, 10, or 11 wherein the extraction train has a cycle time of about 30 minutes.

13. A process according to Claims 9, 10, 11 or 12 wherein the roast and ground coffee has a roast color of from about 22 to about 27 on the Hunter "L" scale.

14. A process according to Claims 9, 10, 11, 12 or 13 wherein the hydrolysis extract is stripped until the level of furfural is reduced to the level present in freshly brewed roast and ground coffee.

15. A coffee brewing article comprising a water-permeable infusion article containing:
   a)   roast and ground coffee; and
   b)   a soluble coffee composition comprising:
      1)   volatile and non-volatile aroma and flavor compounds, at least two of said aroma and flavor compounds being furfural and pyrazine derivatives; wherein the ratio of furfural to total pyrazine derivatives is less than 1.5:1, and wherein the pyrazine derivatives have a g.c. count of at least 20,000, wherein said g.c. counts, on a dry solids basis, are measured on a Freon 11 solution of separated volatiles by capillary gas chromatography on a fused silica column; and

- 4 -

0159754

2) wherein the total ash is less than 12% on a dry solids basis.

16. An article according to Claim 15 wherein the soluble coffee and roast and ground coffee are present in a soluble:roast and ground ratio of from about 1:4 to about 1:1 by weight.

17. A coffee brewing article according to Claim 17 wherein the soluble coffee is in the form of pellets or tablets.

0159754

BLENDING

↓

ROASTING

↓

GRINDING

**Fig. 1**

FRESH
ROASTED
GROUNDS

↓

FRESH EXTRACTION ————————— FINISHED EXTRACT

STRIPPED
HYDROLYSIS
EXTRACT

FRESH STEAM

PARTIALLY
SPENT
GROUNDS

MULTISTAGE
HYDROLYSIS EXTRACT
STEAM STRIPPING

DISCARD
HYDROLYSIS
VOLATILES →

HYDROLYSIS
EXTRACT

HYDROLYSIS EXTRACTION ———————

SPENT
GROUNDS

FRESH WATER

←

↓

CLARIFYING

↓

CONCENTRATION

↓

DRYING

↓

FLAKING, AGGLOMERATION, OR PELLETIZING

Fig. 2A

RETENTION TIME (MINUTES)

2/8

0159754

# Fig. 2B

RETENTION TIME (MINUTES)

# Fig. 2C

RETENTION TIME (MINUTES)

# Fig. 3A

RETENTION TIME (MINUTES)

0159754

Fig. 3B

RETENTION TIME (MINUTES)

# Fig. 3C

RETENTION TIME (MINUTES)

# Fig. 4